(19) Europäisches Patentamt / European Patent Office / Office européen des brevets

(11) **EP 3 016 363 B1**

(12) **EUROPEAN PATENT SPECIFICATION**

(45) Date of publication and mention
of the grant of the patent:
**27.02.2019 Bulletin 2019/09**

(21) Application number: **13888209.7**

(22) Date of filing: **09.08.2013**

(51) Int Cl.:
*H04M 7/00* *(2006.01)*        *G06F 13/40* *(2006.01)*
*G06F 1/26* *(2006.01)*        *G06F 1/32* *(2019.01)*

(86) International application number:
**PCT/CN2013/081134**

(87) International publication number:
**WO 2014/205890 (31.12.2014 Gazette 2014/53)**

(54) **COMMUNICATION MODULE AND TERMINAL FOR REALIZING HOT PLUG**

KOMMUNIKATIONSMODUL UND ENDGERÄT ZUR ERMÖGLICHUNG VON HOT-PLUGGING

MODULE DE COMMUNICATION ET TERMINAL POUR RÉALISER UN BRANCHEMENT À CHAUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2013 CN 201310257589**

(43) Date of publication of application:
**04.05.2016 Bulletin 2016/18**

(73) Proprietor: **Huizhou TCL Mobile Communication
Co., Ltd.
Huizhou, Guangdong 516006 (CN)**

(72) Inventor: **ZHAO, Shiqing
Huizhou, Guangdong 516006 (CN)**

(74) Representative: **Brachmann, Roland W.
Von Lieres Brachmann Schulze
Patentanwälte
Grillparzerstrasse 12A
81675 München (DE)**

(56) References cited:
**CN-A- 101 192 053        CN-U- 201 984 507
US-A1- 2005 059 301       US-A1- 2011 029 703**

**Description**

The present invention relates to the field of mobile communications technologies, and in particular, to a communication module and a terminal for implementing hot plug.

Currently, common communication modules include 3rd-Generation (3G) modules and 4th-Generation (4G) modules, which mainly use Universal Serial Bus (USB) interfaces (specifically, Mini-PCIe (Peripheral Component Interconnect Express) interfaces), and are plugged into terminals such as mobile phones and tablet computers, and connected to host systems in the terminals, thereby implementing an Internet connecting function. A hot plugging operation is usually performed when the 3G/4G module is used in a USB interface of the terminal, that is, a user is allowed to remove or replace the 3G/4G module without shutting down the system or powering off. In this manner, the 3G/4G module can be removed by simple plugging and unplugging actions, and the system runs normally without interruption, thereby improving the timely disaster recovery capability, extensibility and flexibility of the system.

However, the existing 3G/4G module has the following problems during hot plugging:

1. USB interface data is damaged. During design of a Printed Circuit Board (PCB) of the conventional 3G/4G module, all signal pins and data pins have the same length, for example, a USB data pin D+ (Data+, positive data), a USB data pin D- (Data-, negative data) and a power source pin of the USB data interface have the same length. When the 3G/4G module is removed, communication and data of the USB are disconnected at the same time, and at this time, transmission of the data may be not completed yet, and there is not enough time for the host system to store the data, thereby causing loss of a part of the data.

2. A large transient current is generated at a power source interface. When the 3G/4G is plugged in, a power source voltage output by the host system is immediately input to a power source end of the 3G/4G module, thereby generating a large transient current. The large current may burn out a part of elements in a power source module of the 3G/4G module, causing working disorders and even breakdown of the system.

3. A large transient current is generated when the 3G/4G module is started immediately after being connected to a power source. After the conventional 3G/4G module is plugged in, the host system starts the module immediately. Because the 3G/4G module is started immediately after being powered on, a large transient current is generated, which causes a transient drop in a power source voltage of the host system, thereby severely affecting stability and reliability of the system.

US 2011/0029703 A1 discloses an external electronic device being connected to an electronic device via an USB interface including a power pin and a data pin. The external electronic device 2 is a module while the electronic device 1 is a host system.

US 2005/0059301 A1 discloses a standard PCIe card and a standard USB connector. To reduce size while maintaining the functionality of a standard PCIe card interface, a USB-type connector is provided which has its USB pins on one side and additional PCIe pins on the other side of a substrate. Of the USB pins, the USB data pins are slightly shorter than the USB power pin but all are much longer than the additional PCIe pins.

Therefore, the prior art needs to be modified and improved.

In view of the defects of the prior art, objectives of the present invention are to provide a communication module and a terminal for implementing hot plug, so as to solve the problems in the prior art that, during hot plugging of the communication module, data is damaged, and a large transient current is generated, which causes instability of a system.

This problem is solved according to the features of the independent claims. Further embodiments result from the depending claims.

To achieve the above objectives, the present invention uses the following technical solutions:

A communication module for implementing hot plug includes a new-generation Mini-PCIe interface, configured to be connected to a host system, and the communication module further includes:

- a power switch, configured to control connection and disconnection between a power source end of the communication module and a power supply end of the host system;
- a charging unit, configured to generate a charging current when the power switch is turned off, so as to raise a power source voltage of the power source end of the communication module;
- a delay unit, configured to generate a predetermined delay, and control turning on of the power switch according to the predetermined delay; and
- an ON/OFF control unit, configured to control ON/OFF of the communication module according to a control signal output by the host system after the power switch is turned on,
- wherein the charging unit, the power switch, the delay unit and the ON/OFF control unit are separately connected to the new-generation Mini-PCIe interface, the power switch is connected to the charging unit, and the charging unit is connected to the power source end of the communication module; and

- the length of a universal serial bus, USB, data pin of the new-generation Mini-PCIe interface is shorter than the length of a power source pin of new-generation Mini-PCIe interface.

In an embodiment, the communication module is a 3rd-generation, 3G, module or a 4th-generation (4G) module.

In an embodiment, the length of the USB data pin is shorter than the length of the power source pin by 1/3 of the length of the power source pin and the communication module is a 3G module.

In an embodiment, the power switch is a field-effect transistor; a source of the field-effect transistor is connected to a 24th pin of the new-generation Mini-PCIe interface, a first input end of the charging unit and an input end of the delay unit; a gate of the field-effect transistor is connected to an output end of the delay unit, and a drain of the field-effect transistor is connected to a second input end of the charging unit.

In an embodiment, the charging unit includes a first resistor, a first capacitor, and a second capacitor; a first end of the first resistor is connected to the source of the field-effect transistor, the 24th pin of the new-generation Mini-PCIe interface and the input end of the delay unit; a second end of the first resistor is connected to the drain of the field-effect transistor, a first end of the first capacitor, a positive electrode of the second capacitor and the power source end of the communication module; a second end of the first capacitor and a negative electrode of the second capacitor are both grounded.

In an embodiment, the resistance of the first resistor is 20 $\Omega$, the capacitance of the first capacitor is 100 pF, and the capacitance of the second capacitor is 150 $\mu$F.

In an embodiment, the delay unit includes a second resistor and a third capacitor; a first end of the second resistor is connected to the gate of the field-effect transistor, the first end of the second resistor is further connected to the first end of the first resistor and the source of the field-effect transistor through the third capacitor, and a second end of the second resistor is grounded.

In an embodiment, the resistance of the second resistor is 220 K$\Omega$, and the capacitance of the third capacitor is 1 $\mu$F.

In an embodiment, a time constant determined by the first resistor and the second capacitor is less than a time constant determined by the second resistor and the third capacitor.

A communication module for implementing hot plug includes a new-generation Mini-PCIe interface configured to be connected to a host system, and the communication module further includes:

- a power switch, configured to control connection and disconnection between a power source end of the communication module and a power supply end of the host system;
- a charging unit, configured to generate a charging current when the power switch is turned off, so as to raise a power source voltage of the power source end of the communication module;
- a delay unit, configured to generate a predetermined delay, and control turning on of the power switch according to the predetermined delay; and
- an ON/OFF control unit, configured to control ON/OFF of the communication module according to a control signal output by the host system after the power switch is turned on,
- where the charging unit, the power switch, the delay unit and the ON/OFF control unit are separately connected to the new-generation Mini-PCIe interface, the power switch is connected to the charging unit, and the charging unit is connected to the power source end of the communication module; and
- the length of a USB data pin of the new-generation Mini-PCIe interface is shorter than the length of a power source pin of the new-generation Mini-PCIe interface.

In an embodiment, the length of the USB data pin is shorter than the length of the power source pin by a predetermined value, and the predetermined value is 1/3 of the length of the power source pin.

In an embodiment, the power switch is a field-effect transistor; a source of the field-effect transistor is connected to a 24th pin of the new-generation Mini-PCIe interface, a first input end of the charging unit and an input end of the delay unit; a gate of the field-effect transistor is connected to an output end of the delay unit, and a drain of the field-effect transistor is connected to a second input end of the charging unit.

In an embodiment, the charging unit includes a first resistor, a first capacitor and a second capacitor; a first end of the first resistor is connected to the source of the field-effect transistor, the 24th pin of the new-generation Mini-PCIe interface and the input end of the delay unit; a second end of the first resistor is connected to the drain of the field-effect transistor, a first end of the first capacitor, a positive electrode of the second capacitor and the power source end of the communication module; a second end of the first capacitor and a negative electrode of the second capacitor are both grounded.

In an embodiment, the resistance of the first resistor is 20 $\Omega$, the capacitance of the first capacitor is 100 pF, and the capacitance of the second capacitor is 150 μF.

In an embodiment, the delay unit includes a second resistor and a third capacitor; a first end of the second resistor is connected to the gate of the field-effect transistor, the first end of the second resistor is further connected to the first end of the first resistor and the source of the field-effect transistor through the third capacitor, and a second end of the second resistor is grounded.

In an embodiment, the resistance of the second resistor is 220 KΩ, and the capacitance of the third capacitor is 1 μF.

In an embodiment, a time constant determined by the first resistor and the second capacitor is less than a time constant determined by the second resistor and the third capacitor.

In an embodiment, the communication module is a 3G module or a 4G module.

A terminal includes a host system and a communication module for implementing hot plug, where the host system is connected to the communication module; after a power switch of the communication module is turned on, the host system generates a control signal to control ON/OFF of the communication module; and

- the communication module includes:
- a new-generation Mini-PCIe interface, configured to be connected to the host system;
- a power switch, configured to control connection and disconnection between a power source end of the communication module and a power supply end of the host system;
- a charging unit, configured to generate a charging current when the power switch is turned off, so as to raise a power source voltage of the power source end of the communication module;
- a delay unit, configured to generate a predetermined delay, and control turning on of the power switch according to the predetermined delay; and
- an ON/OFF control unit, configured to control ON/OFF of the communication module according to a control signal output by the host system after the power switch is turned on,
- where the charging unit, the power switch, the delay unit and the ON/OFF control unit are separately connected to the new-generation Mini-PCIe interface, the power switch is connected to the charging unit, and the charging unit is connected to the power source end of the communication module; and
- the length of a USB data pin of the new-generation Mini-PCIe interface is shorter than the length of a power source pin of the new-generation Mini-PCIe interface.

In an embodiment, the length of the USB data pin is shorter than the length of the power source pin by a predetermined value, and the predetermined value is 1/3 of the length of the power source pin.

In an embodiment, the power switch is a field-effect transistor; a source of the field-effect transistor is connected to a 24th pin of the new-generation Mini-PCIe interface, a first input end of the charging unit and an input end of the delay unit; a gate of the field-effect transistor is connected to an output end of the delay unit, and a drain of the field-effect transistor is connected to a second input end of the charging unit.

In an embodiment, the charging unit includes a first resistor, a first capacitor and a second capacitor; a first end of the first resistor is connected to the source of the field-effect transistor, the 24th pin of the new-generation Mini-PCIe interface and the input end of the delay unit; a second end of the first resistor is connected to the drain of the field-effect transistor, a first end of the first capacitor, a positive electrode of the second capacitor and the power source end of the communication module; a second end of the first capacitor and a negative electrode of the second capacitor are both grounded.

In an embodiment, the resistance of the first resistor is 20 Ω, the capacitance of the first capacitor is 100 pF, and the capacitance of the second capacitor is 150 μF.

In an embodiment, the delay unit includes a second resistor and a third capacitor; a first end of the second resistor is connected to the gate of the field-effect transistor, the first end of the second resistor is further connected to the first end of the first resistor and the source of the field-effect transistor through the third capacitor, and a second end of the second resistor is grounded.

In an embodiment, the resistance of the second resistor is 220 KΩ, and the capacitance of the third capacitor is 1 μF.

In an embodiment, a time constant determined by the first resistor and the second capacitor is less than a time constant determined by the second resistor and the third capacitor.

In an embodiment, the communication module is a 3G module or a 4G module.

Compared with the prior art, in the communication module for implementing hot plug and the terminal provided in the present invention, during hot-plugging or hot-unplugging of a communication module, it is set that a USB data pin of a new-generation Mini-PCIe interface is shorter than a power source pin of the new-generation Mini-PCIe interface, so that a host system stores USB data in advance or finishes power-on preparation before USB disconnection or communication, thereby ensuring integrity and stability of the data; during hot plugging, a charging unit first raises a power source voltage of the communication module, and a power switch is controlled to be turned on after a predetermined delay of a delay unit, thereby preventing a large transient current generated at this time from damaging electronic elements; at the same time, an ON/OFF control unit controls ON/OFF of the communication module according to a control signal output by the host system after the power switch is turned on, so as to avoid a transient drop in the power source voltage of the host system caused by the large transient current, thereby improving stability and reliability of the system.

The aforementioned characteristics, features and advantages of the invention as well as the way they are achieved will be further illustrated in connection with the following examples and considerations as discussed in view of the figures.

FIG. 1    is a schematic structural block diagram of a terminal for implementing hot plug according to the present invention;

FIG. 2    is a schematic diagram of a part of pins of a communication module for implementing hot plug and a host system according to the present invention;

FIG. 3    is a PCB diagram of a communication module for implementing hot plug according to the present invention;

FIG. 4    is an enlarged schematic diagram of a part A in the PCB diagram of a communication module for implementing hot plug according to the present invention; and

FIG. 5    is a schematic circuit diagram of a communication module for implementing hot plug and a new-generation Mini-PCIe interface according to the present invention.

The present invention provides a communication module and a terminal for implementing hot plug, and in order to make the objectives, technical solutions and effects of the present invention more comprehensible and clearer, the present invention is further described in detail hereinafter through accompany drawings and embodiments. It should be understood that, the specific embodiments described herein are only used to explain the present invention, and are not intended to limit the present invention.

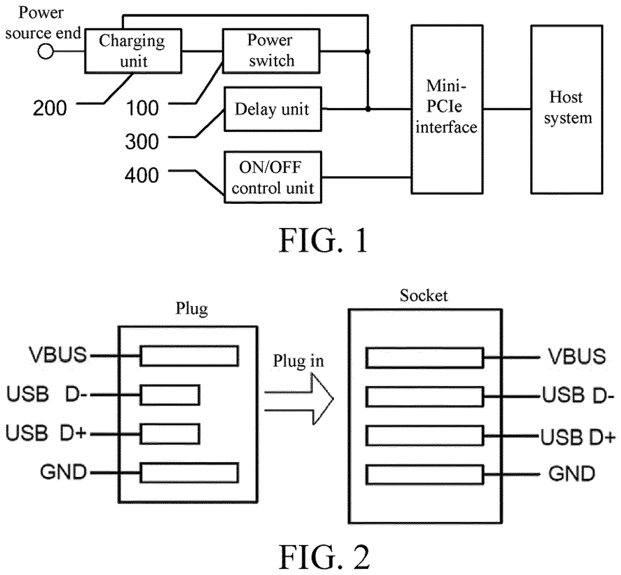

Referring to FIG. 1, a communication module for implementing hot plug provided in the present invention includes a new-generation Mini-PCIe interface (a PCI-E bus-based interface), and the new-generation Mini-PCIe interface is connected to a host system. The communication module further includes a power switch 100, a charging unit 200, a delay unit 300 and an ON/OFF control unit 400. The charging unit 200, the power switch 100, the delay unit 300, and the ON/OFF control unit 400 are separately connected to the new-generation Mini-PCIe interface; the power switch 100 is connected to the charging unit 200, and the charging unit 200 is connected to a power source end V_IO of the communication module. The new-generation Mini-PCIe interface is a gold-finger interface, which has characteristics of small contact resistance and anti-oxidation.

The communication module is a 3G module or a 4G module, and the present invention is described by using a part of improved modules, that is, the power switch 100, the charging unit 200, the delay unit 300 and the ON/OFF control unit 400, in the communication module as embodiments, and other modules in the communication module belong to the prior art and are not described in detail herein.

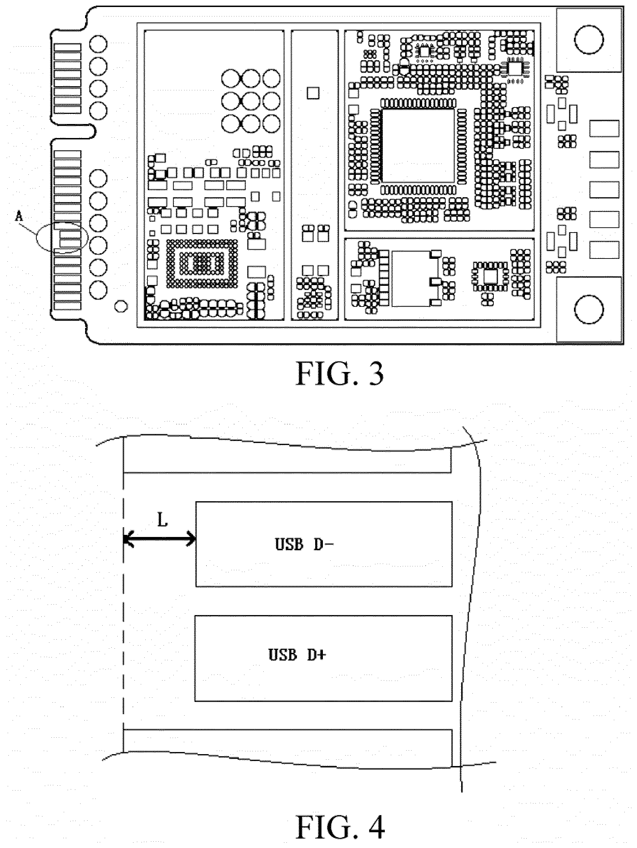

In this embodiment, the communication module is connected to the host system by using a new-generation Mini-PCIe interface. In order to avoid data loss or storage failure when a plug of the communication module is inserted into or removed from a socket of the host system, that is, during hot plugging or hot unplugging, the length of a USB data pin is made to be shorter than the length of a power source pin on a PCB when the PCB of the communication module is configured, as shown in FIG. 2 and FIG. 3. In FIG. 2, the plug indicates the new-generation Mini-PCIe interface of the communication module, and merely USB data pins and a power source pin in the new-generation Mini-PCIe interface are shown. The socket indicates an interface of the host system, merely USB data pins and a power source pin in the interface are shown, and other pins are not shown. It can be seen from FIG. 2 that, a USB data pin D- and a USB data pin D+ of the new-generation Mini-PCIe interface of the communication module are both shorter than a power source pin VBUS, while pins on the socket of the host system remain unchanged. When a PCB is drawn, among a row of pins shown at the left of FIG. 3, only a USB data pin D- and a USB data pin D+ are shorter than other pins, while other pins of the communication module (including a power source pin, which is not shown in the drawing) keep the original length, and have the same length. In this embodiment, the length of the USB data pin D- and the USB data pin D+ of the communication module is shorter than the length of the power source pin of the communication module by 1/3, and is preferably (1/3) ± 0.1mm of the length of the power source pin.

Referring to FIG. 2 and FIG. 3 again, because the USB data pin D- and the USB data pin D+ of the new-generation Mini-PCIe interface are shorter than other pins, such as the power source pin VBUS, when the communication module is plugged into the host system, that is, the plug is inserted into the socket, the power source pin VBUS of the new-generation Mini-PCIe interface of the communication module is first connected to the power source pin VBUS on the socket of the host system, so that the whole system is powered on and starts working, and then the USB data pin D- and the USB data pin D+ of the new-generation Mini-PCIe interface are separately connected to the USB data pin D- and the USB data pin D+ on the host system, so as to perform USB communication. In this way, a central processing unit (CPU) in the host system can power up the communication module in advance, and prepares for transmission of USB data after the system is stable.

When the communication module is removed, the USB data pin D- and the USB data pin D+ of the new-generation Mini-PCIe interface are first disconnected from the USB data pin D- and the USB data pin D+ of the host system, that is, the communication for the USB data transmission is disconnected first; at this time, the CPU can process a disconnection event of the USB and store relevant data. Thereafter, the power source pin VBUS of the communication module is disconnected from the power source pin VBUS of the host system, and the communication module is powered off. During a specific implementation, the length of the USB data pin D- and the USB data pin D+ of the new-generation Mini-PCIe interface may be shorter than that of other pins by 0.5mm, as indicated by the length L shown in FIG. 4. According to different plugging and unplugging speeds, the disconnection of the power source pin VBUS may lag behind the disconnection of the USB data pin D- and the USB data pin D+ by about hundreds of milliseconds; therefore, after the USB data pin D- and the USB data pin D+ are disconnected, a time period of hundreds of milliseconds exists before the disconnection of the power source pin VBUS, and this time period is enough for the CPU to process the USB disconnection event and store relevant data. In this way, the CPU stores all data and stops data transmission before the communication module is powered off, so as to avoid the problems of data loss and storage failure in the prior art caused by simultaneous power-off and disconnection of data transmission, thereby greatly improving integrity and correctness of the data.

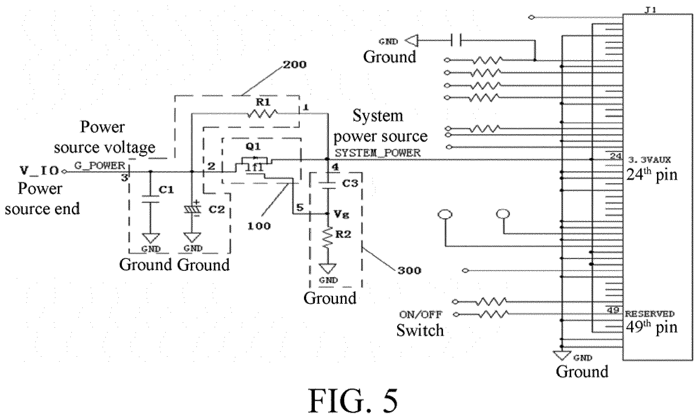

In order to avoid generation of a large transient current when the communication module is plugged into a power source interface, the communication module controls ON/OFF of the power switch 100 by using the charging unit 200 and the delay unit 300. Referring to FIG. 1 and FIG. 5 at the same time, the power switch 100 is configured to control connection or disconnection between the power supply end of the host system and the power source end V_IO of the communication module, that is, an output end 3 of the charging unit 200. The power switch 100 is an MOS field-effect transistor Q1; a source of the MOS field-effect transistor Q1 is connected to a 24$^{th}$ pin (that is, a 3.3VAUX end) of the new-generation Mini-PCIe interface, a first input end 1 of the charging unit 200 and an input end 4 of the delay unit 300; a gate of the MOS field-effect transistor Q1 is connected to an output end 5 of the delay unit 300; and a drain of the MOS field-effect transistor Q1 is connected to a second input end 2 of the charging unit. A system power source SYSTEM_POWER provided by the power supply end of the host system is transmitted to the source of the MOS field-effect transistor Q1, the first input end 1 of the charging unit 200 and the input end 4 of the delay unit 300 through the 24$^{th}$ pin of the new-generation Mini-PCIe interface J1. During a specific implementation, the MOS field-effect transistor Q1 is a PMOS transistor, and when a low level is input at a gate of the MOS field-effect transistor Q1, the MOS field-effect transistor Q1 is on; and when a high level is input at the gate of the MOS field-effect transistor Q1, the MOS field-effect transistor Q1 is off. The new-generation Mini-PCIe interface J1 belongs to the prior art, and FIG. 5 merely shows pins and port names thereof related to the present invention.

When the power switch 100 is turned off, that is, the MOS field-effect transistor Q1 is off, the charging unit 200 generates a charging current to raise a power source voltage of the communication module, so that the power source voltage G_POWER on the power source end V_IO of the communication module gradually rises from 0V to be close or equal to the system power source SYSTEM_POWER of the host system. The charging unit 200 includes a first resistor R1, a first capacitor C1 and a second capacitor C2; a first end of the first resistor R1 is connected to the source of the MOS field-effect transistor Q1, the 24$^{th}$ pin of the new-generation Mini-PCIe interface J1 and the input end of the delay unit 300; a second end of the first resistor R1 is connected to the drain of the MOS field-effect transistor Q1, a first end of the first capacitor C1, a positive electrode of the second capacitor C2 and the power source end V_IO of the communication module; a second end of the first capacitor C1 and a negative electrode of the second capacitor C2 are both grounded.

An intersection of the second end of the first resistor R1 with the drain of the MOS field-effect transistor Q1, the first end of the first capacitor C1 and the positive electrode of the second capacitor C2 is the output end 3 of the charging unit 200, that is, the power source end V_IO of the communication module. When the MOS field-effect transistor Q1 is off, the system power source SYSTEM_POWER performs charging on the first capacitor C1 and the second capacitor C2 through the first resistor R1. The value of the charging current is $(V_{\_SYSTEM\_POWER} - V_{\_G\_POWER})/R1$, where $V_{SYSTEM\_POWER}$ is the voltage value of the system power source SYSTEM_POWER, and $V_{\_G\_POWER}$ is the voltage value of the power source voltage G_POWER. The first capacitor C1 is a filter capacitor, which is configured to remove high frequency and impulse interference by means of filtering, and has a capacitance of 100 pF. The second capacitor C2 is a bulk capacitor, which is configured to perform charging and control impulse power consumption within an adaptive range, and has a capacitance of 150 $\mu$F.

The delay unit 300 is configured to generate a predetermined delay, and after the predetermined delay expires, the power switch is controlled to be turned on, so that the MOS field-effect transistor Q1 is on. The delay unit 300 includes a second resistor R2 and a third capacitor C3; a first end of the second resistor R2 is connected to the gate of the MOS field-effect transistor Q1, the first end of the second resistor R2 is further connected to the first end of the first resistor R1 and the source of the MOS field-effect transistor Q1 through the third capacitor C3, and a second end of the second resistor R2 is grounded. When the communication module is just plugged in, the system power source SYSTEM_POWER is transmitted to the input end 4 of the delay unit 300, that is, a first end of the third capacitor C3. Based on characteristics of a capacitor, the voltages at the two ends of the third capacitor C3 cannot change suddenly; at this time, the voltage at the second end of the third capacitor C3 is equal to the system power source SYSTEM_POWER, and the voltage Vg of the second resistor R2 is equal to the system power source SYSTEM_POWER, which is equivalent to that the gate voltage and the source voltage of the MOS field-effect transistor Q1 are the same, and the MOS field-effect transistor Q1 is off. Two ends of the third capacitor C3 have equal voltages, but have no voltage difference, and therefore, no energy exists. Then, the current on the voltage Vg flows to the ground through the second resistor R2, the voltage Vg drops gradually, and the third capacitor C3 performs negative charging; at this time, a voltage difference occurs between the two ends of the third capacitor C3, and energy is generated. Before the voltage Vg drops to a switch threshold voltage that turns on the MOS field-effect transistor Q1, the MOS field-effect transistor Q1 maintains the cut-off state, and in this case, the first resistor R1 charges the second capacitor C2. When the voltage Vg drops to the switch threshold voltage, the MOS field-effect transistor Q1 is on, and because an internal on-resistance of the MOS field-effect transistor Q1 is very small and can be ignored, the power source end V_IO of the communication module may be considered as being directly connected to the power supply end of the host system, that is, the power source voltage G_POWER is equal to the system power source SYSTEM_POWER, so as to provide a working voltage for the communication module. The resistance of the second resistor R2 and the capacitance of the third capacitor C3 are used to determine a delay constant t of the MOS field-effect transistor Q1,

$$t = R2 \times C3 \times \ln((V_{SYSTEM\_POWER} - Vg1)/V_{SYSTEM\_POWER}),$$

where $V_{SYSTEM\_POWER}$ is the voltage value of the system power source SYSTEM_POWER, and Vg1 is the switch threshold voltage of the MOS field-effect transistor.

It should be noted that, the resistance of the first resistor R1 and the second resistor R2, and the capacitance of the second capacitor C2 and the third capacitor C3 should satisfy that: a time constant determined by the first resistor R1 and the second capacitor C2 is less than a time constant determined by the second resistor R2 and the third capacitor C3; in other words, after the second capacitor C2 is fully charged, and the power source voltage G_POWER of the communication module is close or equal to the system power source SYSTEM_POWER, the third capacitor C3 finishes negative charging, that is, Vg drops to the switch threshold voltage. This is because when the power source voltage G_POWER is close to or equal to the system power source SYSTEM_POWER, the current flowing from the system power source SYSTEM_POWER to the power source voltage G_POWER is very small, and the MOS field-effect transistor Q1 is on at this time, thereby avoiding a large transient current caused by that the system power source SYSTEM_POWER having a certain voltage value is transmitted to the 0V power source voltage G_POWER when the communication module is just plugged in; the transient current has small impact on the power switch 100, that is, the MOS field-effect transistor Q1, and elements inside a power source module in the communication module will not be burnt out, so that influences on the power source of the communication module are reduced. Therefore, according to the resistance of the first resistor R1 and the capacitance of the second capacitor C2, the resistance of the second resistor R2 is correspondingly set to 220 KΩ, and the capacitance of the third capacitor C3 is correspondingly set to 1 μF.

In order to avoid a large transient current caused by that the communication module is started immediately after being plugged in, the CPU of the host system generates a control signal after the MOS field-effect transistor Q1 is on, to turn on the communication module. The control signal is output by a 49th pin (that is, a RESERVED end) of the new-generation Mini-PCIe interface J1, and is transmitted to an ON/OFF control line ON/OFF of the ON/OFF control unit. When the communication module is in an OFF or a working state, the voltage at the ON/OFF control line ON/OFF is at a high level by default, and the control signal is a low-level impulse. When the communication module is in an OFF state, the control signal converts the voltage at the ON/OFF control line ON/OFF into a low level, and the communication module implements startup in response to the low level, the communication module is started up and enters the working state, and because the low level merely lasts a period of time, the voltage at the ON/OFF control line ON/OFF restores the high level later. Principles of shutdown of the communication module can be known in a similar manner. Because the control signal is generated after the MOS field-effect transistor Q1 is on, the whole system is stable at this time, and the current flowing from the system power source SYSTEM_POWER to the power source voltage G_POWER is very small, so that no large transient current occurs, thereby avoiding a transient drop in the power source voltage of the host system caused by that the communication module starts working immediately after being plugged in, and improving the stability and reliability of the system.

The present invention further provides a terminal, which includes a host system and the communication module, and the host system is connected to the communication module; the host system generates a control signal after a power switch of the communication module is turned on, so as to turn on or off the communication module.

Referring to FIG. 1, FIG. 3 and FIG. 5, working principles of three aspects, including USB data pins, a power source interface and start of a 4G module, are described separately by using an example in which the communication module is a 4G module plugged into a mobile phone and a system power source SYSTEM_POWER is equal to 5V.

1. When the 4G module is plugged into the mobile phone, because a USB data pin D- and a USB data pin D+ on the 4G module are shorter than other pins, a power source pin of the 4G module is first connected to a power source pin on a socket of the mobile phone, so that the power source is connected first, and then the USB data pins D- and the USB data pins D+ are connected. In this way, a CPU in the host system finishes power-on and preparation, and then waits for transmission of USB data; to transmit or process the USB data after the system is stable can ensure correctness of the data.

2. After the 4G module is plugged in, the system power source SYSTEM_POWER of the host system is transmitted to the source of the MOS field-effect transistor Q1 through the 24th pin of the new-generation Mini-PCIe interface J1, and at this time, voltages at two ends of the third capacitor C3 are equal and are 5V, that is, the gate voltage and the source voltage of the MOS field-effect transistor Q1 are equal and are 5V, and therefore, the MOS field-effect transistor Q1 is off. In this case, the system power source SYSTEM_POWER performs small-current charging on the first capacitor C1 and the second capacitor C2 through the first resistor R1, and at this stage, the value of the voltage Vg gradually drops as the negative charging process of the third capacitor C3 proceeds. After the second capacitor C2 is fully charged, the power source voltage G_POWER of the communication module is close to or equal to the system power source SYSTEM_POWER. Thereafter, the third capacitor C3 finishes the negative charging, and the voltage Vg drops to a switch threshold voltage, so that the MOS field-effect transistor Q1 is on; because the power source voltage G_POWER is close to or equal to the system power source SYSTEM_POWER at this time, the current transmitted from the system power source SYSTEM_POWER to the power source voltage G_POWER is very small, that is, the impact on the MOS field-effect transistor Q1 is small, thereby avoiding the problem that the MOS field-effect transistor Q1 is on immediately after the 4G module is plugged in, and that a large transient current is generated when the 5V system power source SYSTEM_POWER is transmitted to the 0V power source voltage G_POWER, which generates impact on and thus burns out the MOS field-effect transistor Q1, and affects the system power source.

3. After detecting that the MOS field-effect transistor Q1 is on, the CPU of the host system generates a control signal and outputs the control signal through the 49th pin of the new-generation Mini-PCIe interface J1, and transmits the control signal to the ON/OFF control line ON/OFF of the communication module, so as to turn on the communication module. Because the whole system is in a stable state after the MOS field-effect transistor Q1 is on, if the communication module is turned on at this time, a transient drop in the power source voltage of the host system can be avoided, thereby improving the stability and reliability of the system.

As described in the above, in the communication module and the terminal for implementing hot plug provided in the present invention, it is set that the length of the USB data pins of the new-generation Mini-PCIe interface is shorter than the length of other pins (including the power source pin) of the new-generation Mini-PCIe interface, and during hot-plugging or hot-unplugging of the communication module, the host system stores USB data or finishes power-on preparation in advance, and then disconnects the USB or performs communication, thereby ensuring integrity and stability of the data; during hot plugging, the MOS field-effect transistor is off, the second capacitor is charged to raise the power source voltage of the communication module, and after the second capacitor is fully charged and the power source voltage of the communication module is close to or equal to the system power source, the third capacitor finishes negative charging, and controls the MOS field-effect transistor to be on, which reduces impact of the transient current on the MOS field-effect transistor and stabilizes the system power source. The host system outputs the control signal after the MOS field-effect transistor is on, so as to turn on or off the communication module, thereby avoiding a transient drop in the power source voltage of the host system caused by the large transient current, and improving the stability and reliability of the system.

It can be understood that, for persons of ordinary skill in the art, equivalent replacements or variations may be made according to the technical solution and inventive conceptions of the present invention, and all the variations or replacements should fall within the scope as claimed by the appended claims of the present invention.

**Claims**

1. A communication module for implementing hot plug, comprising a new-generation Mini-Peripheral Component Interconnect Express (PCIe) interface (J1) configured to be connected to the host system, and further comprising:

   - a power switch (100), configured to control connection and disconnection between a power source end (V_IO) of the communication module and a power supply end of the host system;
   - a charging unit (200), configured to a generate charging current when the power switch (100) is turned off, so as to raise a power source voltage of the power source end (V_IO) of the communication module;
   - a delay unit (300), configured to generate a predetermined delay, and control turning on of the power switch (100) according to the predetermined delay; and
   - an ON/OFF control unit (400), configured control ON/OFF of the communication module according to a control signal output by the host system after the power switch (100) is turned on,
   - wherein the charging unit (200), the power switch (100), the delay unit (300) and the ON/OFF control unit (400) are separately connected to the new-generation Mini-PCIe interface (J1), the power switch (100) is connected to the charging unit (200), and the charging unit (200) is connected to the power source end (V_IO) of the communication module; and
   - the length of a universal serial bus, USB, data pin (USB D+, USB D-) of the new-generation Mini-PCIe interface (J1) is shorter than the length of a power source pin (VBUS) of the new-generation Mini-PCIe interface (J1).

2. The communication module for implementing hot plug according to claim 1, wherein the length of the USB data pin (USB D+, USB D-) is shorter than the length of the power source pin (VBUS) by a predetermined value, and the predetermined value is 1/3 of the length of the power source pin (VBUS).

3. The communication module for implementing hot plug according to any of the preceding claims, wherein the power source pin (VBUS) of the new-generation Mini-PCIe interface (J1) is a USB power source pin and the communication module is a $3^{rd}$-generation (3G) module.

4. The communication module for implementing hot plug according to any of the preceding claims, wherein the power switch (100) is a field-effect transistor (Q1); a source of the field-effect transistor (Q1) is connected to a $24^{th}$ pin of the new-generation Mini-PCIe interface (J1), a first input end (1) of the charging unit (200) and an input end (4) of the delay unit (300); a gate of the field-effect transistor (Q1) is connected to an output end (5) of the delay unit (300); and a drain of the field-effect transistor (Q1) is connected to a second input end (2) of the charging unit.

5. The communication module for implementing hot plug according to claim 4, wherein the charging unit (200) comprises a first resistor (R1), a first capacitor (C1) and a second capacitor (C2); a first end of the first resistor (R1) is connected to the source of the field-effect transistor (Q1), the $24^{th}$ pin of the new-generation Mini-PCIe interface (J1) and the input end of the delay unit (300); a second end of the first resistor (R1) is connected to the drain of the field-effect transistor (Q1), a first end of the first capacitor (C1), a positive electrode of the second capacitor (C2) and the power source end (V_IO) of the communication module; a second end of the first capacitor (C1) and a negative electrode of the second capacitor (C2) are both grounded.

6. The communication module for implementing hot plug according to claim 5, wherein the resistance of the first resistor (R1) is 20 Ω, the capacitance of the first capacitor (C1) is 100 pF, and the capacitance of the second capacitor (C2) is 150 μF.

7. The communication module for implementing hot plug according to any of claims 5 or 6, wherein the delay unit (300) comprises a second resistor (R2) and a third capacitor (C3); a first end of the second resistor (R2) is connected to the gate of the field-effect transistor (Q1), the first end of the second resistor (R2) is further connected to the first end of the first resistor (R1) and the source of the field-effect transistor (Q1) through the third capacitor (C3), and a second end of the second resistor (R2) is grounded.

8. The communication module for implementing hot plug according to claim 7, wherein the resistance of the second resistor (R2) is 220 KΩ, and the capacitance of the third capacitor (C3) is 1 μF.

9. The communication module for implementing hot plug according to any of claims 7 or 8, wherein a time constant determined by the first resistor (R1) and the second capacitor (C2) is less than a time constant determined by the second resistor (R2) and the third capacitor (C3).

**10.** The communication module for implementing hot plug according to any of the preceding claims, wherein the communication module is a 3$^{rd}$-generation (3G) module or a 4$^{th}$-generation (4G) module.

**11.** A terminal, comprising a host system and a communication module for implementing hot plug according to any of the preceding claims, wherein the host system is connected to the communication module; after a power switch (100) of the communication module is turned on, the host system generates a control signal to control ON/OFF of the communication module.

**12.** The terminal according to claim 11, wherein the length of the USB data pin (USB D+, USB D-) is shorter than the length of the power source pin (VBUS) by a predetermined value, and the predetermined value is 1/3 of the length of the power source pin (VBUS).

**13.** The terminal according to any of claims 11 or 12, wherein the power switch (100) is a field-effect transistor (Q1); a source of the field-effect transistor is connected to a 24$^{th}$ pin of the new-generation Mini-PCIe interface, a first input end of the charging unit (200) and an input end of the delay unit (300); a gate of the field-effect transistor (Q1) is connected to an output end of the delay unit (300); and a drain of the field-effect transistor (Q1) is connected to a second input end of the charging unit (200).

**14.** The terminal according to claim 13, wherein the charging unit (200) comprises a first resistor (R1), a first capacitor (C1) and a second capacitor (C2); a first end of the first resistor (R1) is connected to the source of the field-effect transistor (Q1), the 24$^{th}$ pin of the new-generation Mini-PCIe interface (J1) and the input end of the delay unit (300); a second end of the first resistor (R1) is connected to the drain of the field-effect transistor (Q1), a first end of the first capacitor (C1), a positive electrode of the second capacitor (C2) and the power source end (V_IO) of the communication module; a second end of the first capacitor (C1) and a negative electrode of the second capacitor (C2) are both grounded.

**Patentansprüche**

**1.** Kommunikationsmodul zum Implementieren von Hot Plug, umfassend eine Mini-Peripherie Component Interconnect Express (PCIe)-Schnittstelle (J1) der neuen Generation, die konfiguriert ist, um mit dem Hostsystem verbunden zu werden, und des Weiteren umfasst:

- einen Leistungsschalter (100), der konfiguriert ist, um eine Verbindung und eine Verbindungstrennung zwischen einem Leistungsquellende (V_IO) des Kommunikationsmoduls und einem Leistungsversorgungsende des Hostsystems zu steuern;
- eine Ladeeinheit (200), die konfiguriert ist, um einen Ladestrom zu generieren, wenn der Leistungsschalter (100) ausgeschaltet wird, um so eine Leistungsquellspannung des Leistungsquellendes (V_IO) des Kommunikationsmoduls anzuheben;
- eine Verzögerungseinheit (300), die konfiguriert ist, um eine vorbestimmte Verzögerung zu generieren und ein Einschalten des Leistungsschalters (100) gemäß der vorbestimmten Verzögerung zu steuern; und
- eine EIN/AUS-Steuereinheit (400), die konfiguriert ist, um EIN/AUS des Kommunikationsmoduls gemäß einer Steuersignalausgabe durch das Hostsystem zu steuern, nachdem der Leistungsschalter (100) eingeschaltet wurde,
- wobei die Ladeeinheit (200), der Leistungsschalter (100), die Verzögerungseinheit (300) und die EIN/AUS-Steuereinheit (400) separat mit der Mini-PCIe-Schnittstelle der neuen Generation (J1) verbunden sind, der Leistungsschalter (100) mit der Ladeeinheit (200) verbunden ist, und die Ladeeinheit (200) mit dem Leistungsquellende (V_IO) des Kommunikationsmoduls verbunden ist; und
- die Länge eines Datenpins des Universal Serial Bus, USB, (USB D+, USB D-) der Mini-PCIe-Schnittstelle der neuen Generation (J1) kürzer als die Länge eines Leistungsquellpins (VBUS) der Mini-PCIe-Schnittstelle der neuen Generation (J1) ist.

**2.** Kommunikationsmodul zum Implementieren von Hot Plug nach Anspruch 1, wobei die Länge des USB-Datenpins (USB D+, USB D-) um einen vorbestimmten Wert kürzer als die Länge des Leistungsquellpins (VBUS) ist, und wobei der vorbestimmte Wert 1/3 der Länge des Leistungsquellpins (VBUS) ist.

**3.** Kommunikationsmodul zum Implementieren von Hot Plug gemäß einem der vorhergehenden Ansprüche, wobei der Leistungsquellpin (VBUS) der Mini-PCIe-Schnittstelle der neuen Generation (J1) ein USB-Leistungsquellpin ist und das Kommunikationsmodul ein Modul der 3. Generation (3G) ist.

4. Kommunikationsmodul zum Implementieren von Hot Plug nach einem der vorhergehenden Ansprüche, wobei der Leistungsschalter (100) ein Feldeffekttransistor (Q1) ist; die Source des Feldeffekttransistors (Q1) mit einem 24. Pin der Mini-PCIe-Schnittstelle der neuen Generation (J1), einem ersten Eingangsende (1) der Ladeeinheit (200) und einem Eingangsende (4) der Verzögerungseinheit (300) verbunden ist; ein Gate des Feldeffekttransistors (Q1) mit einem Ausgangsende (5) der Verzögerungseinheit (300) verbunden ist; und ein Drain des Feldeffekttransistors (Q1) mit einem zweiten Eingangsende (2) der Ladeeinheit verbunden ist.

5. Kommunikationsmodul zum Implementieren von Hot Plug nach Anspruch 4, wobei die Ladeeinheit (200) einen ersten Widerstand (R1), einen ersten Kondensator (C1) und einen zweiten Kondensator (C2) umfasst; ein erstes Ende des ersten Widerstands (R1) mit der Source des Feldeffekttransistors (Q1), dem 24. Pin der Mini-PCIe-Schnittstelle der neuen Generation (J1) und dem Eingangsende der Verzögerungseinheit (300) verbunden ist; ein zweites Ende des ersten Widerstands (R1) mit dem Drain des Feldeffekttransistors (Q1), einem ersten Ende des ersten Kondensators (C1), einer positiven Elektrode des zweiten Kondensators (C2) und dem Leistungsquellende (V_IO) des Kommunikationsmoduls verbunden ist; wobei ein zweites Ende des ersten Kondensators (C1) und eine negative Elektrode des zweiten Kondensators (C2) beide geerdet sind.

6. Kommunikationsmodul zum Implementieren von Hot Plug nach Anspruch 5, wobei der Widerstandswert des ersten Widerstands (R1) 20 Ω beträgt, die Kapazität des ersten Kondensators (C1) 100 pF beträgt, und die Kapazität des zweiten Kondensators (C2) 150 µF beträgt.

7. Kommunikationsmodul zum Implementieren von Hot Plug nach einem der Ansprüche 5 oder 6, wobei die Verzögerungseinheit (300) einen zweiten Widerstand (R2) und einen dritten Kondensator (C3) umfasst; ein erstes Ende des zweiten Widerstands (R2) mit dem Gate des Feldeffekttransistors (Q1) verbunden ist, das erste Ende des zweiten Widerstands (R2) des Weiteren mit dem ersten Ende des ersten Widerstands (R1) und der Source des Feldeffekttransistors (Q1) über den dritten Kondensator (C3) verbunden ist, und ein zweites Ende des zweiten Widerstands (R2) geerdet ist.

8. Kommunikationsmodul zum Implementieren von Hot Plug nach Anspruch 7, wobei der Widerstandswert des zweiten Widerstands (R2) 220 KΩ beträgt, und die Kapazität des dritten Kondensators (C3) 1 µF beträgt.

9. Kommunikationsmodul zum Implementieren von Hot Plug nach einem der Ansprüche 7 oder 8, wobei eine Zeitkonstante, die durch den ersten Widerstand (R1) und den zweiten Kondensator (C2) bestimmt wird, kleiner als eine Zeitkonstante ist, die durch den zweiten Widerstand (R2) und den dritten Kondensator (C3) bestimmt wird.

10. Kommunikationsmodul zum Implementieren von Hot Plug nach einem der vorhergehenden Ansprüche, wobei das Kommunikationsmodul ein Modul der 3. Generation (3G) oder ein Modul der 4. Generation (4G) ist.

11. Endgerät, das ein Hostsystem und ein Kommunikationsmodul zum Implementieren von Hot Plug gemäß einem der vorhergehenden Ansprüche umfasst, wobei das Hostsystem mit dem Kommunikationsmodul verbunden ist; wobei das Hostsystem, nachdem ein Leistungsschalter (100) des Kommunikationsmoduls eingeschaltet worden ist, ein Steuersignal generiert, um das EIN/AUS des Kommunikationsmoduls zu steuern.

12. Endgerät nach Anspruch 11, wobei die Länge des USB-Datenpins (USB D+, USB D-) um einen vorbestimmten Wert kürzer als die Länge des Leistungsquellpins (VBUS) ist, und wobei der vorbestimmte Wert 1/3 der Länge des Leistungsquellpins (VBUS) ist.

13. Endgerät nach einem der Ansprüche 11 oder 12, wobei der Leistungsschalter (100) ein Feldeffekttransistor (Q1) ist; eine Source des Feldeffekttransistors mit einem 24. Pin der Mini-PCIe-Schnittstelle der neuen Generation, einem ersten Eingangsende der Ladeeinheit (200) und einem Eingangsende der Verzögerungseinheit (300) verbunden ist; ein Gate des Feldeffekttransistors (Q1) mit einem Ausgangsende der Verzögerungseinheit (300) verbunden ist; und ein Drain des Feldeffekttransistors (Q1) mit einem zweiten Eingangsende der Ladeeinheit (200) verbunden ist.

14. Endgerät nach Anspruch 13, wobei die Ladeeinheit (200) einen ersten Widerstand (R1), einen ersten Kondensator (C1) und einen zweiten Kondensator (C2) umfasst; ein erstes Ende des ersten Widerstands (R1) mit der Source des Feldeffekttransistors (Q1), dem 24. Pin der Mini-PCIe-Schnittstelle der neuen Generation (J1) und dem Eingangsende der Verzögerungseinheit (300) verbunden ist; ein zweites Ende des ersten Widerstands (R1) mit dem Drain des Feldeffekttransistors (Q1), einem ersten Ende des ersten Kondensators (C1), einer positiven Elektrode des zweiten Kondensators (C2) und dem Leistungsquellende (V_IO) des Kommunikationsmoduls verbunden ist; wobei ein zweites Ende des ersten Kondensators (C1) und eine negative Elektrode des zweiten Kondensators (C2) beide geerdet sind.

## Revendications

1. Module de communication pour la mise en oeuvre d'un connecteur à chaud, comprenant une interface Mini-Peripheral Component Interconnect Express (PCIe) de nouvelle génération (J1) configurée pour être connectée au système hôte, et comprenant en outre :

   un interrupteur d'alimentation (100), configuré pour commander la connexion et la déconnexion entre une extrémité de source d'alimentation (V_IO) du module de communication et une extrémité d'alimentation du système hôte ;
   une unité de chargement (200), configurée pour générer un courant de charge lorsque l'interrupteur d'alimentation (100) est éteint, de manière à élever une tension d'alimentation de l'extrémité de source d'alimentation (V_IO) du module de communication ;
   une unité de temporisation (300), configurée pour générer un retard prédéterminé, et commander l'activation de l'interrupteur d'alimentation (100) selon le retard prédéterminé ; et
   une unité de commande ON/OFF (400), configurée pour commander l'activation et la désactivation ON/OFF du module de communication en fonction d'un signal de commande délivré en sortie par le système hôte après que l'interrupteur d'alimentation (100) a été activé,
   où l'unité de chargement (200), l'interrupteur d'alimentation (100), l'unité de temporisation (300) et l'unité de commande ON/OFF (400) sont connectés séparément à l'interface Mini-PCIe de nouvelle génération (J1), l'interrupteur d'alimentation (100) est connecté à l'unité de chargement (200), et l'unité de chargement (200) est connectée à l'extrémité de source d'alimentation (V_IO) du module de communication ; et
   la longueur d'une broche de données (USB D+, USB D-) d'un bus série universel, USB, de l'interface Mini-PCIe de nouvelle génération (J1) est inférieure à la longueur d'une broche de source d'alimentation (VBUS) de l'interface Mini-PCIe de nouvelle génération (J1).

2. Module de communication pour la mise en oeuvre d'un connecteur à chaud selon la revendication 1, dans lequel la longueur de la broche de données USB (USB D+, USB D-) est inférieure d'une valeur prédéterminée à la longueur de la broche de source d'alimentation (VBUS), et la valeur prédéterminée est 1/3 de la longueur de la broche de source d'alimentation (VBUS).

3. Module de communication pour la mise en oeuvre d'un connecteur à chaud selon l'une quelconque des revendications précédentes, dans lequel la broche de source d'alimentation (VBUS) de l'interface Mini-PCIe (J1) de nouvelle génération est une broche d'alimentation USB, et le module de communication est un module de 3e génération (3G).

4. Module de communication pour la mise en oeuvre d'un connecteur à chaud selon l'une quelconque des revendications précédentes, dans lequel l'interrupteur d'alimentation (100) est un transistor à effet de champ (Q1) ; une source du transistor à effet de champ (Q1) est connectée à une 24ème broche de l'interface Mini-PCIe nouvelle génération (J1), à une première extrémité d'entrée (1) de l'unité de chargement (200) et à une extrémité d'entrée (4) de l'unité de temporisation (300) ; une grille du transistor à effet de champ (Q1) est connectée à une extrémité de sortie (5) de l'unité de temporisation (300) ; et un drain du transistor à effet de champ (Q1) est connecté à une seconde extrémité d'entrée (2) de l'unité de chargement.

5. Module de communication pour la mise en oeuvre d'un connecteur à chaud selon la revendication 4, dans lequel l'unité de chargement (200) comprend une première résistance (R1), un premier condensateur (C1) et un deuxième condensateur (C2); une première extrémité de la première résistance (R1) est connectée à la source du transistor à effet de champ (Q1), à la 24ème broche de l'interface Mini-PCIe nouvelle génération (J1) et à l'extrémité d'entrée de l'unité de temporisation (300) ; une seconde extrémité de la première résistance (R1) est connectée au drain du transistor à effet de champ (Q1), à une première extrémité du premier condensateur (C1), à une électrode positive du deuxième condensateur (C2) et à l'extrémité de source d'alimentation (V_IO) du module de communication ; une seconde extrémité du premier condensateur (C1) et une électrode négative du deuxième condensateur (C2) sont toutes les deux connectées à la terre.

**6.** Module de communication pour la mise en oeuvre d'un connecteur à chaud selon la revendication 5, dans lequel la résistance de la première résistance (R1) est de 20 Ω, la capacité du premier condensateur (C1) est de 100 pF, et la capacité du deuxième condensateur (C2) est de 150 μF.

**7.** Module de communication pour la mise en oeuvre d'un connecteur à chaud selon l'une quelconque des revendications 5 ou 6, dans lequel l'unité de temporisation (300) comprend une seconde résistance (R2) et un troisième condensateur (C3) ; une première extrémité de la seconde résistance (R2) est connectée à la grille du transistor à effet de champ (Q1), la première extrémité de la seconde résistance (R2) est connectée à la première extrémité de la première résistance (R1) et à la source du transistor à effet de champ (Q1) à travers le troisième condensateur (C3), et une seconde extrémité de la seconde résistance (R2) est mise à la terre.

**8.** Module de communication pour la mise en oeuvre d'un connecteur à chaud selon la revendication 7, dans lequel la résistance de la seconde résistance (R2) est de 220 KΩ et la capacité du troisième condensateur (C3) est 1 μF.

**9.** Module de communication pour la mise en oeuvre d'un connecteur à chaud selon l'une quelconque des revendications 7 ou 8, dans lequel une constante de temps déterminée par la première résistance (R1) et le deuxième condensateur (C2) est inférieure à une constante de temps déterminée par la seconde résistance (R2) et le troisième condensateur (C3).

**10.** Module de communication pour la mise en oeuvre d'un connecteur à chaud selon l'une quelconque des revendications précédentes, dans lequel le module de communication est un module de troisième génération (3G) ou un module de quatrième génération (4G).

**11.** Terminal comprenant un système hôte et un module de communication pour mettre en oeuvre un connecteur à chaud selon l'une quelconque des revendications précédentes, dans lequel le système hôte est connecté au module de communication ; après qu'un interrupteur d'alimentation (100) du module de communication a été activé, le système hôte génère un signal de commande pour commander l'activation/la désactivation, ON/OFF, du module de communication.

**12.** Terminal selon la revendication 11, dans lequel la longueur de la broche de données USB (USB D+, USB D-) est inférieure d'une valeur prédéterminée à la longueur de la broche de source d'alimentation (VBUS), et la valeur prédéterminée est 1/3 de la longueur de la broche de source d'alimentation (VBUS).

**13.** Terminal selon l'une quelconque des revendications 11 ou 12, dans lequel l'interrupteur d'alimentation (100) est un transistor à effet de champ (Q1) ; une source du transistor à effet de champ est connectée à une 24ème broche de l'interface Mini-PCIe nouvelle génération, à une première extrémité d'entrée de l'unité de chargement (200) et à une extrémité d'entrée de l'unité de temporisation (300) ; une grille du transistor à effet de champ (Q1) est connectée à une extrémité de sortie de l'unité de temporisation (300) ; et un drain du transistor à effet de champ (Q1) est connecté à une seconde extrémité d'entrée de l'unité de chargement (200).

**14.** Terminal selon la revendication 13, dans lequel l'unité de chargement (200) comprend une première résistance (R1), un premier condensateur (C1) et un deuxième condensateur (C2) ; une première extrémité de la première résistance (R1) est connectée à la source du transistor à effet de champ (Q1), à la 24ème broche de l'interface Mini-PCIe nouvelle génération (J1) et à l'extrémité d'entrée de l'unité de temporisation (300) ; une seconde extrémité de la première résistance (R1) est connectée au drain du transistor à effet de champ (Q1), à une première extrémité du premier condensateur (C1), à une électrode positive du deuxième condensateur (C2) et à l'extrémité de source d'alimentation (V_IO) du module de communication ; une seconde extrémité du premier condensateur (C1) et une électrode négative du deuxième condensateur (C2) sont toutes les deux connectées à la terre.

Power
source end

Charging
unit

Power
switch

Delay unit

ON/OFF
control unit

Mini-
PCIe
interface

Host
system

200        100

300

400

## FIG. 1

Plug

VBUS

USB D-

USB D+

GND

Plug in

Socket

VBUS

USB D-

USB D+

GND

## FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110029703 A1

- US 20050059301 A1